Europäisches Patentamt

European Patent Office

Office européen des brevets

(19)

(11) EP 0 970 592 B1

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(21) Anmeldenummer: **98945001.0**

(22) Anmeldetag: **16.07.1998**

(51) Int Cl.$^7$: **H05B 41/00**

(86) Internationale Anmeldenummer:
**PCT/DE98/01997**

(87) Internationale Veröffentlichungsnummer:
**WO 99/08490 (18.02.1999 Gazette 1999/07)**

(54) **VERFAHREN ZUM ERZEUGEN VON IMPULSSPANNUNGSFOLGEN FÜR DEN BETRIEB VON ENTLADUNGSLAMPEN UND ZUGEHÖRIGE SCHALTUNGSANORDNUNG**

METHOD FOR PRODUCING IMPULSE VOLTAGE SEQUENCES TO OPERATE DISCHARGE LAMPS AND CIRCUIT PERTAINING THERETO

PROCEDE DE PRODUCTION DE SERIES D'IMPULSIONS DE TENSION DES LAMPES A DECHARGE, ET CIRCUIT ASSOCIE

(84) Benannte Vertragsstaaten:
**BE DE FR GB IT NL SE**

(30) Priorität: **12.08.1997 DE 19734883**

(43) Veröffentlichungstag der Anmeldung:
**12.01.2000 Patentblatt 2000/02**

(73) Patentinhaber: **Patent-Treuhand-Gesellschaft für elektrische Glühlampen mbH**
**81543 München (DE)**

(72) Erfinder:
• **VOLLKOMMER, Frank**
**D-82131 Buchendorf (DE)**

• **HITZSCHKE, Lothar**
**D-81737 München (DE)**

(56) Entgegenhaltungen:
**US-A- 5 111 118**

• **PATENT ABSTRACTS OF JAPAN vol. 010, no. 009 (P-420), 14. Januar 1986 & JP 60 165537 A (OKI DENKI KOGYO KK), 28. August 1985**
• **PATENT ABSTRACTS OF JAPAN vol. 096, no. 010, 31. Oktober 1996 & JP 08 145889 A (SHIMADZU CORP), 7. Juni 1996**

## Beschreibung

### Technisches Gebiet

Die Erfindung betrifft ein Verfahren zum Erzeugen von Impulsspannungsfolgen für den Betrieb von Entladungslampen mittels gepulster, dielektrisch behinderter Entladung gemäß dem Oberbegriff des Anspruchs 1. Außerdem betrifft die Erfindung eine elektrische Schaltungsanordnung zum Erzeugen von Impulsspannungsfolgen gemäß diesem Verfahren. Schließlich betrifft die Erfindung auch ein Beleuchtungssystem gemäß dem Oberbegriff des darauf gerichteten Anspruchs mit dieser Schaltungsanordnung.

Unter dem Begriff "Entladungslampe" sind auch solche Strahlungsquellen zu verstehen, die neben elektromagnetischer Strahlung im sichtbaren Spektralbereich, also Licht, auch oder sogar überwiegend Strahlung im UV- bzw. VUV-Bereich emittieren.

Die Impulsspannungsfolge kann prinzipiell sowohl unipolar als auch bipolar sein und dient zum Betreiben von Entladungslampen bzw. -strahlern, bei denen mindestens die Elektroden einer Polarität dielektrisch behindert sind, wie beispielsweise in der WO 94/23442 beschrieben. Diese Betriebsweise verwendet eine im Prinzip unbeschränkte Folge von Spannungsimpulsen, während denen vornehmlich elektrische Wirkleistung eingekoppelt wird und die durch Totzeiten voneinander getrennt sind. Entscheidend für die Effizienz der Nutzstrahlungserzeugung sind im wesentlichen die Impulsform, insbesondere steile Anstiege, sowie die Zeitdauern der Puls- bzw. Totzeiten. Die erforderlichen Spitzenwerte der Spannungspulse betragen - abhängig unter anderem von der Schlagweite, von der Art und dem Druck des Füllgases sowie von der Art und Dicke des Dielektrikums - typisch ein bis mehrere Kilovolt.

### Stand der Technik

Aus der Schrift DE 195 48 003 A1 ist bereits eine derartige Schaltungsanordnung zur Erzeugung von Impulsspannungsfolgen mit einem Impulskreis bekannt. Dieser Impulskreis besteht im wesentlichen aus einem Kondensator, einem Transistor und einem Impulstransformator. Während der Leitendphase des Transistors wird die im Kondensator gespeicherte Energie zum Impulstransformator transferiert. Dabei transformiert der Impulstransformator die Impulsspannung auf die erforderlichen Spitzenwerte, womit allerdings einige Nachteile verbunden sind. Erstens muß der Impulstransformator auf den Spitzenwert der Impulsspannungsfolge ausgelegt sein und ist deshalb relativ groß und teuer. Außerdem ist die Impulsbelastung des Impulstransformators relativ groß und die ebenfalls relativ großen Wickelkapazitäten beeinträchtigen die Impulsform. Ein weiterer Nachteil ist, daß auf den Zuleitungen der Sekundärwicklung des Impulstransformators der volle Spitzenwert der Impulsspannungsfolge auftritt.

Aufgrund von allgegenwärtigen Streukapazitäten zur Umgebung resultieren daraus relativ hohe Störsignale, sogenannte EMI (Electromagnetic Interference). Außerdem erfolgt die gesamte für jeden Entladungspuls erforderliche Energieaufnahme vollständig aus dem Impulskreis, weshalb dieser entsprechend ausgelegt sein muß.

### Darstellung der Erfindung

Es ist Aufgabe der vorliegenden Erfindung, die genannten Nachteile zu vermeiden und ein Verfahren gemäß dem Oberbegriff des Anspruchs 1 bereitzustellen, welches eine Impulsfolge erzeugt, die eine effizientere Energiebereitstellung für die gepulst betriebene, dielektrisch behinderte Entladung gewährleistet. Ein weiterer Aspekt ist es, geringere EMI zu erzeugen.

Diese Aufgabe wird durch die kennzeichnenden Merkmale des Anspruchs 1 gelöst. Besonders vorteilhafte Ausgestaltungen finden sich in den davon abhängigen Ansprüchen.

Eine weitere Aufgabe der vorliegenden Erfindung ist es, eine Schaltungsanordnung zur Durchführung dieses Verfahrens bereitzustellen. Diese Aufgabe wird durch die Merkmale des auf die Schaltungsanordnung gerichteten unabhängigen Anspruchs gelöst. Weitere besonders vorteilhafte Merkmale finden sich in den davon abhängigen Ansprüchen.

Schließlich ist es eine Aufgabe der vorliegenden Erfindung, ein Beleuchtungssystem gemäß dem Oberbegriff des auf das Beleuchtungssystem gerichteten unabhängigen Anspruchs bereitzustellen. Diese Aufgabe wird durch die kennzeichnenden Merkmale dieses Anspruchs gelöst.

Der Grundgedanke der Erfindung besteht darin, einen Teil der für gepulste, dielektrisch behinderte Entladungen erforderlichen Impulsspitzenwerte durch eine Offset-Gleichspannungskomponente zu ersetzen, wobei außerdem ein Teil der vornehmlich während der Dauer der Spannungspulse in die Entladung(en) eingekoppelten elektrischen Wirkleistung aufgrund der Offset-Gleichspannungskomponente eingekoppelt wird.

Dazu werden mindestens eine Offset-Gleichspannung und eine Folge von Spannungspulsen zu einer Gesamtspannung additiv überlagert derart, daß die Offset-Gleichspannungskomponente quasi den "Sockel" der Gesamtspannung bildet, auf dem die Folge von Spannungspulsen aufgesetzt sind. Auf diese Weise resultiert der Spitzenwerte der Gesamtspannung aus der Summe des Wertes der Offset-Gleichspannung und der Spitzenwerte der Spannungspulse. Folglich sind mit Hilfe der erfindungsgemäßen Überlagerung Spannungspulse mit kleineren Spitzenwerten ausreichend als ohne Überlagerung, um eine erforderliche Höhe von effektiv wirksamen Spitzenwerten zu erzielen.

Die Gesamtamplitude der Offset-Gleichspannung wird dabei gezielt höchstens so hoch gewählt, daß die Entladung(en) nach jedem Spannungspuls verlöschen kann (können). Diese Forderung muß erfüllt sein, um die in der WO 94/23442 beschriebene effiziente Betriebsweise zu erhalten.

Die einzelnen Impulse der Folge von Spannungspulsen können sowohl unipolar sein als auch bipolar. Der Begriff "bipolarer Impuls" bedeutet, daß innerhalb eines solchen Impulses die zeitabhängige Spannung ein- oder auch mehrmals das Vorzeichen wechselt. Durch die Überlagerung einer Folge bipolarer Impulse mit einer Offset-Gleichspannung läßt sich auch eine bipolare Gesamtspannung erzeugen.

Außerdem sieht die Erfindung eine die Offset-Gleichspannung liefernde Quelle vor, die geeignet ist, einen Teil der vornehmlich während der Dauer der Spannungspulse in die Entladung(en) eingekoppelten elektrischen Wirkleistung bereitzustellen. Dies hat den Vorteil, daß die Impulsquelle nur den restlichen Teil der für die gepulst betriebene, dielektrisch behinderte Entladung erforderliche Leistung liefern muß und deshalb nur für entsprechend kleinere Leistungen ausgelegt wird.

Das erfindungsgemäße Verfahren zum Erzeugen von Impulsspannungsfolgen für den Betrieb von Entladungslampen mittels gepulster, dielektrisch behinderter Entladung(en) sieht folgende Verfahrensschritte vor.

- Mindestens eine Offset-Gleichspannung wird bereitgestellt, wobei die Gesamtamplitude der Offset-Gleichspannungen gezielt höchstens so hoch gewählt wird, daß die Entladung(en) nach jedem Spannungspuls verlöschen kann (können) und ein unerwünschtes Wiederzünden zwischen den einzelnen Spannungspulsen verhindert wird.

- Eine Folge von durch Pausen voneinander getrennten Spannungspulsen wird bereitgestellt, wobei in Bezug zu einem gemeinsamen Potential die Polarität der Folge entgegengesetzt zu der Polarität der Offset-Gleichspannung ist.

- Die mindestens eine Offset-Gleichspannung und die Folge von Spannungspulsen werden zu einer Gesamtspannung überlagert derart, daß die Spitzenwerte der Gesamtspannung aus der Summe des Betrages der Offset-Gleichspannung und des Betrages der Spitzenwerte der Spannungspulse resultieren (betragsmäßig additive Überlagerung).

Für die bestimmungsgemäße Verwendung der so erzeugten Gesamtspannung wird diese an die Elektroden angelegt.

Aufgrund der geringeren erforderlichen Pulshöhe der Folge von Spannungspulsen reicht es aus, den Impulskreis für kleinere Spitzenwerte auszulegen, woraus einige weitere bemerkenswerte Vorteile resultieren. Zunächst einmal reicht für den im Impulskreis üblicherweise vorhandenen Impulstransformator ein geringeres Übersetzungsverhältnis aus oder es kann möglicherweise völlig auf den Impulstransformator verzichtet werden. In beiden Fällen können steilere Pulsflanken erzielt werden, was eine Steigerung der Effizienz der Nutzstrahlungserzeugung zur Folge hat. Ferner wird durch die Verringerung der Höhe der Spannungspulse auch eine Verringerung der EMI und des Stromes im Primärkreis des Impulstransformators erreicht.

Die erfindungsgemäße Schaltungsanordnung zum Erzeugen von Impulsspannungsfolgen gemäß des vorstehend beschriebenen Verfahrens umfaßt einen Impulskreis und einen Gleichspannungskreis, jeweils mit zwei Ausgangspolen.

Einer der beiden Ausgangspole des Impulskreises ist mit dem Ausgangspol entgegengesetzter Polarität des zweiten Impulskreises Gleichspannungskreis verbunden. Die Verbindung der beiden genannten Ausgangspole legt das Bezugspotential gegenüber den zwei freien Ausgangspolen der beiden seriell geschalteten Kreise fest. Auf diese Weise liegt zwischen den beiden freien Ausgangspolen das Differenzsignal der beiden jeweils zwischen einem freien Ausgangspol und dem Bezugspotential liegenden Teilsignale, d.h. zwischen den beiden freien Ausgangspolen liegt die betragsmäßig additive Überlagerung der Impulsspannungsfolge und der Offset-Gleichspannung. Das Bezugspotential kann, muß aber nicht notwendigerweise mit der Schaltungsmasse oder mit Erdpotential verbunden sein.

Der Impulskreis ist beispielsweise jeweils gemäß der in der DE 195 48 003 A1 offenbarten Schaltung aufgebaut. Die konkrete Ausführung des Impulskreises wird sich im Einzelfall nach den erforderlichen Spitzenwerten an den Elektroden ausrichten. Maßgebend für die vorteilhafte Wirkung der Schaltung ist in erster Linie, daß der Impulskreis geeignet ist, eine Teilfolge von durch Pausen voneinander getrennten Spannungspulsen zu liefern.

Außerdem kann der Impulskreis auch aus zwei oder mehr seriell geschalteten Teilimpulskreisen bestehen. Auf diese Weise wird die Impulsspannungsfolge aus zwei oder mehr Teilfolgen betragsmäßig additiv zusammengesetzt. Auf diese Weise müssen jeweils nur entsprechend geringere Spitzenwerte für die Teilfolgen erzeugten werden um daraus den geforderten Spitzenwert der resultierenden Impulsspannungsfolge zu erreichen.

Der Gleichspannungskreis ist im einfachsten Fall eine Batterie oder eine an sich bekannte elektronische Gleichspannungsschaltung. Maßgebend für die vorteilhafte Wirkung der Schaltung ist hier in erster Linie, daß der Gleichspannungskreis geeignet ist, eine Offset-Gleichspannung zu liefern. Außerdem ist die elektrische Leistungsfähigkeit des Gleichspannungskreises vorteilhaft so bemessen, daß ein signifikanter Anteil, z.B. mehr als ca. 20%, der für die Entladung(en) benötigten elektrischen Leistung vom Gleichspannungskreis geliefert wird.

Der Vorteil gegenüber dem Stand der Technik ist hierbei, daß der Querschnitt des Drahtes für die Wicklungen des Impulstransformators und/oder des Transformatorkernes kleiner gewählt werden können. Außerdem ist das für eine vorgebbare Spitzenspannung erforderliche Übersetzungs- und folglich Wickelverhältnis des Impulstransformators kleiner als beim Stand der Technik. Daraus resultiert als weiterer Vorteil, daß steilere Flanken der Spannungsimpulse und folglich eine höhere Effizienz der Nutzstrahlungserzeugung erzielt werden können.

Außerdem kann in vielen Fällen, in denen bisher ein Einsatz eines Transformators unumgänglich war, völlig auf den Einsatz eines Transformators verzichtet werden, da erfindungsgemäß ein Teil der benötigten Spitzenspannung vom Gleichspannungskreis beigetragen wird.

Ferner kann zwischen dem mindestens, einen Gleichspannungskreis und der korrespondierenden Verbindungsleitung zur Strahlungsquelle ein Schalter eingebaut werden. Der oder gegebenenfalls die Schalter sind mit dem Impulskreis derart synchronisiert, daß der bzw. die Schalter während der Dauer der Spannungsimpulse geschlossen und während der Dauer der Pausen geöffnet ist bzw. sind. Dadurch wird verhindert, daß die Offset-Gleichspannung(en) während der Pausen an den Elektroden anliegt (anliegen). Der Schalter selbst muß im Unterschied zum Impulskreis nicht besonders schnell sein. Schaltzeiten im Bereich von einigen µs, z.B. 5 µs, sind ausreichend. Die Schaltzeit wird durch eine entsprechende Vorlaufzeit bei der Synchronisierung derart berücksichtigt, daß die Offset-Gleichspannung an den Elektroden anliegt sobald der Spannungspuls beginnt.

Schließlich wird Schutz für ein Beleuchtungssystem beansprucht, welches aus der erfindungsgemäßen Schaltungsanordnung und einer mittels gepulster, dielektrisch behinderter Entladung betriebenen Strahlungsquelle besteht.

**Beschreibung der Zeichnungen**

Im folgenden soll die Erfindung anhand eines Ausführungsbeispiels näher erläutert werden. Es zeigen:

Figur 1       eine erfindungsgemäße Schaltungsanordnung mit einem Flachstrahler,

Figur 2a      einen zeitlichen Ausschnitt der Impulsspannungsfolge $U_P(t)$ aus Figur 1,

Figur 2b      einen zeitlichen Ausschnitt der Offset-Gleichspannung $U_{DC}(t)$ aus Figur 1,

Figur 2c      einen zeitlichen Ausschnitt der Differenzspannungsfolge $U(t)$ aus Figur 1.

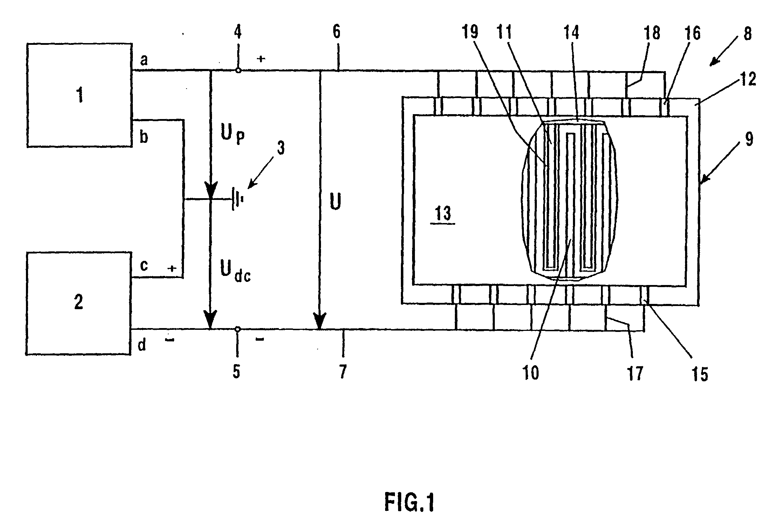

Die Figur 1 zeigt in schematischer Darstellung das Blockschaltbild der erfindungsgemäßen Schaltungsanordnung zum Erzeugen von Impulsspannungsfolgen und einen Flachstrahler. Die Schaltungsanordnung besteht im wesentlichen aus einem Impulskreis 1 und einem Gleichspannungskreis 2. Jeder der beiden Kreise weist je zwei Ausgangspole a, b; c, d auf. Im Betrieb liefert der Impulskreis zwischen seinen Ausgangspolen a, b eine Impulsspannungsfolge $U_p(t)$. Der Gleichspannungskreis 2 liefert zwischen seinen Ausgangspolen c, d eine Offset-Gleichspannung $U_{DC}$. Der positive (+) Ausgangspol a des Impulskreises 1 und der negative (-)Ausgangspol d des Gleichspannungskreises 2 sind mit Anschlüssen 4 bzw. 5 verbunden. Die Anschlüsse 4 bzw. 5 sind ihrerseits über Zuleitungen 6, 7 mit dem Flachstrahler 8 verbunden. Die jeweiligen freien Ausgangspole b; c der beiden Kreise 1, 2 sind miteinander sowie mit Erdpotential (3) verbunden, welches als Bezugspotential dient. Dadurch sind die beiden Kreise 1, 2 seriell geschaltet und es wird im Betrieb zwischen dem positiven (+) Ausgangspol a des Impulskreises 1 und dem negativen (-) Ausgangspol d des Gleichspannungskreises 2 eine Differenzspannungsfolge $U(t)$ erzeugt.

Der Flachstrahler 8 besteht aus einem Entladungsgefäß 9, streifenförmigen Kathoden 10 und dielektrisch behinderten, streifenförmigen Anoden 11. Das Entladungsgefäß 9 besteht aus einer Bodenplatte 12, einer Deckenplatte 13 und einem Rahmen 14, die allesamt eine rechteckige Grundfläche aufweisen. Bodenplatte 12 und Deckenplatte 13 sind mittels Glaslot mit dem Rahmen gasdicht verbunden derart, daß das Innere des Entladungsgefäßes 9 quaderförmig ausgebildet ist. Die Bodenplatte 12 ist größer als die Deckenplatte 13 derart, daß das Entladungsgefäß 9 einen umlaufenden freistehenden Rand aufweist. Die Kathoden 10 und Anoden 11 sind abwechselnd und parallel zueinander im gegenseitigen Abstand von ca. 6 mm auf der Innenwandung der Bodenplatte 12 angeordnet. Die Kathoden 10 und Anoden 11 sind an einander entgegengesetzten Enden verlängert und aus dem Innern des Entladungsgefäßes 9 auf der Bodenplatte 12 beidseitig nach außen geführt. Auf dem Rand der Bodenplatte 12 gehen die Kathoden 10 und Anoden 11 jeweils in kathodenseitige 15 bzw. anodenseitige 16 äußere Stromzuführungen über.

Die äußeren Stromzuführungen 15, 16 sind jeweils mittels eines kurzen Verbindungsstücks 17, 18 mit den Zuleitungen 6, 7 verbunden.

Der Durchbruch in der Deckenplatte 13 dient lediglich darstellerischen Zwecken und gibt den Blick auf einen Teil der Anoden 11 und Kathoden 10 frei. Im Innern des Entladungsgefäßes 9 sind die Anoden 11 vollständig mit einer Glasschicht 19 bedeckt, deren Dicke ca. 250 µm beträgt. Die Elektroden 10;11 und Außenkontakte 15;16 sind als verschiedene Abschnitte einer kathodenseitigen und einer anodenseitigen Schichtstruktur aus Silber realisiert, die mittels Siebdrucktechnik und anschließendem Einbrennen gemeinsam aufgebracht sind. Die Schichtdicke beträgt ca. 6 μm.

In einer Variante (nicht dargestellt) ist der Impulskreis durch die Serienschaltung zweier Teilimpulskreise realisiert.

In einer weiteren Variante (nicht dargestellt) ist in die mit der Gleichspannungsquelle verbundenen Verbindungsleitungen zur Strahlungsquelle ein Schalter eingebaut, der mit dem Impulskreis derart synchronisiert ist, daß der Schalter während der Dauer der Spannungsimpulse geschlossen und während der Dauer der Pausen geöffnet ist. Dadurch wird verhindert, daß die Offset-Gleichspannung während der Pausen an den Elektroden anliegt.

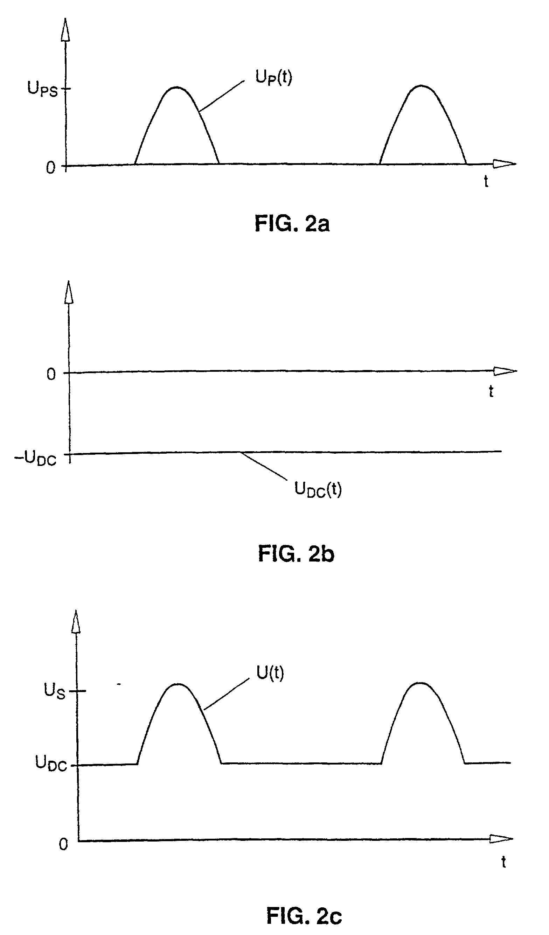

In den Figuren 2a bis 2c sind jeweils zeitliche Ausschnitte der Impulsspannungsfolge $U_p(t)$ und der Offset-Gleichspannung $U_{DC}(t) = -U_{DC}$ sowie der Differenzenfolge $U(t)$ aus Figur 1 schematisch und exemplarisch dargestellt. Gezeigt sind zwei halbsinusförmige Spannungspulse mit dem jeweiligen Spitzenwert $U_{PS}$, die Offset-Gleichspannung $-U_{DC}$ und das Differenzsignal $U(t)$ der beiden vorgenannten Signale, für dessen Spitzenwert Us gilt $|U_S| = U_{PS} + |U_{DC}|$, d.h. das Gesamtsignal in Figur 2c ist eine additive Überlagerung der Beträge der Einzelsignale aus den Figuren 2a und 2b.

An dieser Stelle sei nochmals darauf hingewiesen, daß in der Figuren 2a die Signalform der Impulsspannungsfolge $U_p(t)$ lediglich exemplarischen Charakter hat. Erfindungsgemäß sind insbesondere alle jene Signalformen geeignet und mittels der Schaltungsanordnung erzeugbar, die in der WO 94/23442 offenbart sind, einschließlich bipolarer Impulsformen (ein oder auch mehrere Vorzeichenwechsel innerhalb der Impulse).

**Patentansprüche**

1.  Verfahren zum Erzeugen von Impulsspannungsfolgen für den Betrieb von Entladungslampen (8) mittels gepulster, dielektrisch behinderter Entladung (en) mit

    - einem zumindest teilweise transparenten und mit einer Gasfüllung gefüllten geschlossenen oder von einem Gas oder Gasgemisch durchströmten offenen Entladungsgefäß (9) aus elektrisch nichtleitendem Material und

    - Elektroden (10, 11) einer ersten und einer zweiten Polarität, wobei zumindest die Elektroden (11) einer Polarität vom Innern des Entladungsgefäßes (9) durch dielektrisches Material (19) getrennt sind,

    und mit folgenden Verfahrensschritten,

    - Bereitstellen mindestens einer Offset-Gleichspannung ($U_{DC}(t)$), wobei die Amplitude ($U_{DC}$) der Offset-Gleichspannung ($U_{DC}(t)$) oder gegebenenfalls die resultierende Gesamtamplitude aller Offset-Gleichspannungen gezielt höchstens so hoch gewählt wird, daß die Entladung (en) nach jedem Spannungspuls verlöschen kann (können) und ein unerwünschtes Wiederzünden zwischen den einzelnen Spannungspulsen verhindert wird,

- Bereitstellen einer Folge von durch Pausen voneinander getrennten Spannungspulsen ($U_P$ (t)), wobei in Bezug zu einem gemeinsamen Potential (3) die Polarität der Folge ($U_P(t)$) entgegengesetzt zu der Polarität der mindestens einen Offset-Gleichspannung ($U_{DC}(t)$) ist,

- Überlagern der mindestens einen Offset-Gleichspannung ($U_{DC}(t)$) und der Impulsspannungsfolge ($U_P(t)$) zu einer Gesamtspannung ($U(t)$) derart, daß die Spitzenwerte ($U_S$) der Gesamtspannung ($U(t)$) der Summe der jeweiligen Beträge der Spitzenwerte ($U_{DC}, U_{PS}$) der mindestens einen Offset-Gleichspannung ($U_{DC}(t)$) und der Impulsspannungsfolge ($U_P(t)$) entsprechen, d.h. daß gilt:

$$|U_S| = |U_{DC}| + |U_{PS}|,$$

- Anlegen der Gesamtspannung ($U(t)$) an die Elektroden (10,11),

wobei ein Teil der vornehmlich während der Dauer der Spannungspulse in die Entladung(en) eingekoppelten elektrischen Wirkleistung aufgrund der Offset-Gleichspannung ($U_{DC}(t)$) eingekoppelt wird.

2.  Verfahren nach Anspruch 1, **dadurch gekennzeichnet, daß** die Summe ($|U_S|$) aus der Amplitude ($|U_{DC}|$) der Offset-Gleichspannung ($U_{DC}(t)$) und den Spitzenwerten ($|U_{PS}|$) der Folge von Spannungspulsen ($U_P(t)$) ungefähr gleich groß oder größer als die Zündspannung der Entladung(en) ist.

3.  Verfahren nach einem der Ansprüche 1 oder 2, **dadurch gekennzeichnet, daß** der aufgrund der Offset-Gleichspannung ($U_{DC}(t)$) eingekoppelte Teil der elektrischen Wirkleistung mehr als ca. 20% beträgt.

4.  Verfahren nach einem der Ansprüche 1 bis 3, **gekennzeichnet durch** einen zusätzlichen Verfahrensschritt, in dem jeweils während der Pausen die Offset-Gleichspannung auf das gemeinsame Bezugspotential getastet wird.

5.  Verfahren nach einem der Ansprüche 1 bis 4, **gekennzeichnet durch** einen zusätzlichen Verfahrensschritt, in dem die Impulsfolge **durch** additive Überlagerung der Beträge mindestens zweier Teilimpulsfolgen erzeugt wird.

6. Schaltungsanordnung zum Erzeugen von Impulsspannungsfolgen gemäß dem Verfahren nach einem der Ansprüche 1 bis 5 für den Betrieb von Entladungslampen (8) mittels gepulster, dielektrisch behinderter Entladung(en) mit

- einem Impulskreis (1) mit zwei Ausgangspolen (a, b), welcher Impulskreis (1) geeignet ist, eine Folge ($U_P(t)$) von durch Pausen voneinander getrennten Spannungspulsen zu liefern,

- einem Gleichspannungskreis (2) mit zwei Ausgangspolen (c, d), welcher Gleichspannungskreis (2) geeignet ist, eine Offset-Gleichspannung ($U_{DC}$) und einen Teil der vornehmlich während der Dauer der Spannungspulse in die Entladung(en) eingekoppelten elektrischen Wirkleistung zu liefern und welcher Gleichspannungskreis (2) seriell zum Impulskreis (1) geschaltet ist derart, daß einer der beiden Ausgangspole (c) des Gleichspannungskreises (2) mit dem Ausgangspol (b) entgegengesetzter Polarität des Impulskreises (1) verbunden ist, wodurch sich jeweils die Beträge ($|U_{PS}|$, $|U_{DC}|$) der Impulsspannungsfolge ($U_P(t)$) und der Offset-Gleichspannung ($U_{DC}$) additiv überlagern.

7. Schaltungsanordnung nach Anspruch 6, **dadurch gekennzeichnet, daß** der vom Gleichspannungskreis (2) gelieferte Teil der elektrischen Wirkleistung mehr als ca. 20% beträgt.

8. Schaltungsanordnung nach Anspruch 6 oder 7, **dadurch gekennzeichnet, daß** zwischen Entladungslampe und Gleichspannungskreis ein Schalter geschaltet ist, der jeweils im wesentlichen während der Dauer der Spannungspulse geschlossen und ansonsten geöffnet ist.

9. Schaltungsanordnung nach einem der Ansprüche 6 bis 8, **dadurch gekennzeichnet, daß** der Impulskreis eine Serienschaltung aus mindestens zwei Teilimpulskreisen enthält, welche Teilimpulskreise geeignet sind, Teilimpulsfolgen zu erzeugen, wobei jeweils ein Ausgangspol eines Teilimpulskreises mit dem Ausgangspol entgegengesetzter Polarität eines anderen Teilimpulskreises verbunden ist, wodurch sich die Impulsspannungsfolge der Serienschaltung aus der additiven Überlagerung der Teilimpulsfolgen ergibt.

10. Beleuchtungssystem mit

- einer Strahlungsquelle (8), insbesondere einer Entladungslampe, welche Strahlungsquelle (8) für eine dielektrisch behinderte Entladung geeignet ist, wobei die Strahlungsquelle (8) folgendes umfaßt:

 - ein zumindest teilweise transparentes und mit einer Gasfüllung gefülltes geschlossenes oder von einem Gas oder Gasgemisch durchströmtes offenes Entladungsgefäß (9) aus elektrisch nichtleitendem Material und

 - Elektroden (10, 11), wobei zumindest die Elektroden (11) einer Polarität vom Innern des Entladungsgefäßes (9) durch dielektrisches Material (19) getrennt sind,

- einer mit den Elektroden (10, 11) verbundenen Impulsspannungsquelle (1, 2), die geeignet ist, durch Pausen voneinander getrennte Spannungspulse zu liefern,

**dadurch gekennzeichnet, daß** die Impulsspannungsquelle (1, 2) eine Schaltungsanordnung mit Merkmalen eines oder mehrerer der Ansprüche 6 bis 9 aufweist.

## Claims

1. Method for producing pulsed-voltage sequences for the operation of discharge lamps (8) by means of (a) pulsed discharge(s) which is (are) impeded dielectrically, having

- an at least partially transparent discharge vessel (9), which is closed and filled with a gas filling or is open and has a gas or a gas mixture flowing through it and is composed of electrically non-conductive material, and

- electrodes (10, 11) of a first polarity and of a second polarity, at least the electrodes (11) of one polarity being isolated from the interior of the discharge vessel (9) by means of dielectric material (19),

and having the following method steps,

- provision of at least one offset DC voltage ($U_{DC}(t)$), the amplitude ($U_{DC}$) of the offset DC voltage ($U_{DC}(t)$) or, possibly the resultant total amplitude of all the offset DC voltages being deliberately chosen to be at most sufficiently high that the discharge(s) can be extinguished after each voltage pulse and undesirable restriking between the individual voltage pulses is prevented,

- provision of a sequence of voltage pulses ($U_p(t)$), which are separated from one another by pauses, the polarity of the sequence ($U_p(t)$) being opposite the polarity of the at least one offset DC voltage ($U_{DC}(t)$) with respect to a common potential (3),

- superimposition of the at least one offset DC voltage ($U_{DC}(t)$) and the pulsed-voltage sequence ($U_p(t)$) to form a total voltage ($U(t)$) in such a manner that the peak values ($U_S$) of the total voltage ($U(t)$) correspond to the sum of the respective magnitudes of the peak values ($U_{DC}$, $U_{PS}$) of the at least one offset DC voltage ($U_{DC}(t)$) and of the pulsed-voltage sequence ($U_P(t)$), that is to say $|U_S| = |U_{DC}| + |U_{PS}|$,

- application of the total voltage ($U(t)$) to the electrodes (10, 11),

a portion of the electrical real power injected into the discharge(s) predominantly throughout the duration of the voltage pulses being injected on the basis of the offset DC voltage ($U_{DC}(t)$).

2. Method according to Claim 1, **characterized in that** the sum ($|U_S|$) of the amplitude ($|U_{DC}|$) of the offset DC voltage ($U_{DC}(t)$) and the peak values ($|U_{PS}|$) in the sequence of voltage pulses ($U_P(t)$) is of approximately equal magnitude to, or is greater than, the striking voltage of the discharge(s).

3. Method according to one of Claims 1 or 2, **characterized in that** the portion of the electrical real power injected on the basis of the offset DC voltage ($U_{DC}(t)$) is more than about 20%.

4. Method according to Claims 1 to 3, **characterized by** an additional method step in which, during each of the pauses, the offset DC voltage is pulsed at the common reference-earth potential

5. Method according to one of Claims 1 to 4, **characterized by** an additional method step in which the pulse sequence is produced by additive superimposition of the magnitudes of at least two partial pulse sequences.

6. Circuit arrangement for producing pulsed-voltage sequences in accordance with the method according to one of Claims 1 to 5 for the operation of discharge lamps (8) by means of (a) pulsed discharge(s) which is(are) impeded dielectrically, having

- a pulse circuit (1) having two output poles (a, b), which pulse circuit (1) is suitable for supplying a sequence ($U_P(t)$) of voltage pulses which are separated from one another by pauses,

- a DC voltage circuit (2) having two output poles (c, d), which DC voltage circuit (2) is suitable for supplying an offset DC voltage ($U_{DC}$) and a portion of the electrical real power injected into the discharge(s) predominantly throughout the duration of the voltage pulses, and which DC voltage circuit (2) is connected in series with the pulse circuit (1) in such a manner that one of the two output poles (c) of the DC voltage circuit (2) is connected to the output pole (b) of opposite polarity of the pulse circuit (1), by which means the magnitudes ($|U_{PS}|$, $|U_{DC}|$) of the pulsed-voltage sequence ($U_P(t)$) and of the offset DC voltage ($U_{DC}$) are additively superimposed in each case.

7. Circuit arrangement according to Claim 6, **characterized in that** the portion of the electrical real power supplied by the DC voltage circuit (2) is more than about 20%.

8. Circuit arrangement according to Claim 6 or 7, **characterized in that** a switch is connected between the discharge lamp and the DC voltage circuit, which switch is in each case essentially closed throughout the duration of the voltage pulses and is otherwise open.

9. Circuit arrangement according to one of Claims 6 to 8, **characterized in that** the pulse circuit contains a series circuit formed by at least two partial pulse circuits, which partial pulse circuits are suitable for producing partial pulse sequences, one output pole of one partial pulse circuit being in each case connected to the output pole of opposite polarity of another partial pulse circuit, by which means the pulsed-voltage sequence of the series circuit results from the additive superimposition of the partial pulse sequences.

10. Lighting system having

- a radiation source (8), in particular a discharge lamp, which radiation source (8) is suitable for a discharge which is impeded dielectrically, the radiation source (8) comprising the following:

  - an at least partially transparent discharge vessel (9), which is closed and filled with a gas filling or is open and has a gas or a gas mixture flowing through it and is composed of electrically non-conductive material, and

  - electrodes (10, 11), at least the electrodes (11) of one polarity being isolated from the interior of the discharge vessel (9) by dielectric material (19),

- Pulsed-voltage source (1,2) which is connected to the electrodes (10, 11) and is suitable for supplying voltage pulses which are separated from one another by pauses,

  **characterized in that** the pulsed-voltage source (1, 2) has a circuit arrangement having the features of one or more of Claims 6 to 9.

## Revendications

1. Procédé pour produire des trains d'impulsions de tension pour le fonctionnement de lampes (8) à décharge au moyen d'une décharge ou de décharges pulsées, non complètes du point de vue diélectrique, comportant

   - une enceinte (9) de décharge en matériau non conducteur de l'électricité, au moins en partie transparente et fermée en étant remplie d'une atmosphère gazeuse ou ouverte en étant traversée par un gaz ou un mélange gazeux et
   - des électrodes (10, 11) d'une première et d'une deuxième polarité, au moins les électrodes (11) d'une polarité étant séparées de l'intérieur de l'enceinte (9) de décharge par du matériau (19) diélectrique,

     et comportant les étapes opératoires suivantes,

   - mise à disposition d'au moins une tension ($U_{DC}$(t)) continue de décalage, l'amplitude ($U_{DC}$) de la tension ($U_{DC}$(t)) continue de décalage ou, le cas échéant, l'amplitude totale résultante de toutes les tensions continues de décalage étant choisie de manière ciblée au maximum si grande que la décharge ou les décharges peut (vent) s'éteindre après chaque impulsion de tension et que tout réallumage intempestif entre les impulsions de tension individuelles est empêché,
   - mise à disposition d'un train d'impulsions ($U_P$(t)) de tension séparées les unes des autres par des arrêts, la polarité du train ($U_P$(t)) étant, par rapport à un potentiel (3) commun, opposée à la polarité de la au moins une tension ($U_{DC}$(t)) continue de décalage,
   - superposition de la au moins une tension ($U_{DC}$(t)) continue de décalage et du train ($U_P$(t)) d'impulsions de tension pour former une tension (U(t)) totale de telle manière que les valeurs ($U_S$) de pic de la tension (U(t)) totale correspondent à la somme des valeurs absolues associées des valeurs ($U_{DC}$, $U_{PS}$) de pic de la au moins une tension ($U_{DC}$(t)) continue de décalage et du train ($U_P$(t)) d'impulsions de tension, c'est à dire que l'on a : $|U_S| = |U_{DC}| + |U_{PS}|$,
   - application de la tension (U(t)) totale aux électrodes (10, 11),

     une partie de la puissance réelle électrique injectée principalement pendant la durée des impulsions de tension dans la décharge ou les décharges étant injectée sur la base de la tension ($U_{DC}$(t)) continue de décalage.

2. Procédé suivant la revendication 1, **caractérisé en ce que** la somme ($|U_S|$) de l'amplitude ($|U_{DC}|$) de la tension ($U_{DC}$(t)) continue de décalage et des valeurs ($|U_{PS}|$) de pic du train d'impulsions ($U_P$(t)) de tension est à peu près aussi grande ou plus grande que la tension d'amorçage de la décharge ou des décharges.

3. Procédé suivant l'une des revendications 1 ou 2, **caractérisé en ce que** la partie de la puissance réelle électrique injectée sur la base de la tension ($U_{DC}$(t)) continue de décalage est égale à plus d'environ 20%.

4. Procédé suivant l'une des revendications 1 à 3, **caractérisé par** une étape opératoire supplémentaire, la tension continue de décalage étant pulsée chaque fois pendant les arrêts au potentiel de référence commun.

5. Procédé suivant l'une des revendications 1 à 4, **caractérisé par** une étape opératoire supplémentaire dans laquelle le train d'impulsions est produit par superposition additive des valeurs absolues d'au moins deux sous-trains d'impulsions.

6. Montage pour produire des trains d'impulsions de tension conformément au procédé suivant l'une des revendications 1 à 5 pour le fonctionnement de lampes (8) à décharge au moyen d'une décharge ou de décharges pulsées, non complètes du point de vue diélectrique comportant

   - un circuit (1) d'impulsions à deux pôles (a, b) de sortie, ce circuit (1) d'impulsions convenant pour fournir un train ($U_P$(t)) d'impulsions de tension séparées les unes des autres par des arrêts,
   - un circuit (2) de tension continue comportant deux pôles (c, d) de sortie, ce circuit (2) de tension continue convenant pour fournir une tension ($U_{DC}$) continue de décalage et une partie de la puissance réelle électrique injectée principalement pendant la durée des impulsions de tension dans la décharge pu les décharges et ce circuit (2) de tension continue étant monté en série avec le circuit (1) d'impulsions de telle manière que l'un (c) des deux pôles de sortie du circuit (2) de tension continue est relié au pôle (b) de sortie de polarité opposée du circuit (1) d'impulsions, les valeurs ($(|U_{PS}|, |U_{DC}|$) du train ($U_P(t)$) d'impulsions de tension et de la tension ($U_{DC}$) continue de décalage se superposant en addition.

7. Montage suivant la revendication 6, **caractérisé en ce que** la partie de la puissance réelle électrique fournie par le circuit (2) de tension continue est égale à plus d'environ 20%.

8. Montage suivant la revendication 6 ou 7, **caractérisé en ce qu'**il est branché entre la lampe à décharge et le circuit de tension continue un interrupteur qui est fermé essentiellement pendant la durée des impulsions de tension et qui est ouvert sinon.

9. Montage suivant l'une des revendications 6 à 8, **caractérisé en ce que** le circuit d'impulsions contient un circuit série constitué d'au moins deux sous-circuits d'impulsions, ces sous-circuits d'impulsions convenant pour produire des sous-trains d'impulsions, chaque fois un pôle de sortie d'un sous-circuit d'impulsions étant relié au pôle de sortie de polarité opposée d'un autre sous-circuit d'impulsions, ce qui fait que le train de tension d'impulsions du circuit série est obtenu à partir de la superposition par addition des sous-trains d'impulsions.

10. Système d'éclairage comportant

   • une source (8) de rayonnement, notamment une lampe à décharge, cette source (8) de rayonnement convenant pour une décharge non complète du point de vue diélectrique, la source (8) de rayonnement comprenant ce qui suit :

   - une enceinte (9) de décharge en matériau non conducteur de l'électricité, au moins en partie transparente et fermée en étant remplie d'une atmosphère gazeuse ou ouverte en étant traversée par un gaz ou un mélange gazeux, et
   - des électrodes (10, 11), au moins les électrodes (11) d'une polarité étant séparées de l'intérieur de l'enceinte (9) de décharge par du matériau (19) diélectrique,

   • une source (1, 2) d'impulsions de tension qui est reliée aux électrodes (10, 11) et qui convient pour fournir des impulsions de tension séparées les unes des autres par des arrêts,

   **caractérisé en ce que** la source (1, 2) d'impulsions de tension comporte un montage ayant les caractéristiques de l'une ou plusieurs des revendications 6 à 9.

FIG.1

FIG. 2a

FIG. 2b

FIG. 2c